**Europäisches Patentamt**

(19) **European Patent Office**

**Office européen des brevets**

(11) Numéro de publication: **0 187 567**

**B1**

(12) **FASCICULE DE BREVET EUROPÉEN**

(45) Date de publication du fascicule du brevet:
02.08.89

(51) Int. Cl.⁴: **B 65 D 47/20**

(21) Numéro de dépôt: **85402338.9**

(22) Date de dépôt: **28.11.85**

(54) **Dispositif de bouchage de tubes, de flacons ou autres récipients à ouverture et fermeture commandées par rotation.**

(30) Priorité: 07.12.84 FR 8418787
06.03.85 FR 8503292

(43) Date de publication de la demande:
16.07.86 Bulletin 86/29

(45) Mention de la délivrance du brevet:
02.08.89 Bulletin 89/31

(84) Etats contractants désignés:
AT BE CH DE GB IT LI LU NL SE

(56) Documents cité:
EP-A-0 052 059
CH-A-291 075
DE-A-2 644 947
DE-A-3 020 361
FR-A-1 161 615
FR-A-1 503 120
FR-A-1 561 377
FR-A-2 292 635
FR-A-2 414 005
FR-A-2 488 855
FR-A-2 565 560
FR-E-77 453
US-A-2 601 040
US-A-2 980 302
US-A-3 058 631
US-A-3 237 816
US-A-3 656 647

(73) Titulaire: **Morel, Simone, 15 rue du Faubourg de Paris, F-51210 Montmirail (FR)**

(72) Inventeur: **Morel, Simone, 15 rue du Faubourg de Paris, F-51210 Montmirail (FR)**

(74) Mandataire: **Madeuf, René Louis, Cabinet Madeuf 3, Avenue Bugeaud, F-75116 Paris (FR)**

(56) Documents cité: (suite)
US-A-3 809 299
US-A-3 837 518
US-A-3 894 661
US-A-4 288 006

## Description

La présente invention concerne un dispositif de bouchage de tubes, de flacons ou autres récipients à ouverture et fermeture commandées par la rotation d'une enveloppe constituant l'extérieur du dispositif de bouchage.

Habituellement, les conditionnements de produits en tube ou flacon sont munis d'une capsule de fermeture qui est enlevée au moment de l'utilisation.

On a toutefois déjà réalisé des bouchages permettant une utilisation du produit sans avoir à retirer la capsule. La présente invention crée un dispositif de ce type d'une fabrication simple et d'un maniement facile.

Un mode de réalisation preferé de l'invention crée un dispositif de bouchage avec capsule-clapet et enveloppe dans lequel la rotation d'un quart de tour de l'enveloppe permet l'obturation ou l'ouverture de l'orifice du récipient.

Le document DE-A-2 644 947 a déjà décrit (voir en particulier les figures 1 à 7 et la description page 8, ligne 19, à page 11, ligne 20) un dispositif de bouchage de tubes, de flacons ou autres récipients qui comprend une capsule-clapet dont le plateau porte un accessoire faisant saillie à la partie supérieure et maintenu par des lames saillantes au milieu d'un passage de sortie du liquide, ledit plateau se développant vers le bas en une jupe d'habillage de la bague du récipient, ladite capsule-clapet étant associée à une enveloppe qui comprend un plateau à orifice central et une jupe d'habillage extérieure, et cet accessoire étant constitué par un picot ou bouchon pour la fermeture de l'orifice central de l'enveloppe et l'ouverture et la fermeture du dispositif étant obtenues par la rotation de l'enveloppe par rapport à la capsule-clapet.

Conformément à l'invention, la jupe d'habillage comporte sur sa périphérie externe deux crans diamétralement opposés et la jupe d'habillage extérieure deux rampes internes d'orientation symétriquement opposées servant d'appui aux crans diamétralement opposés correspondants de la jupe d'habillage du plateau de la capsule-clapet, l'enveloppe présentant, à la surface interne du plateau de l'enveloppe, une jupe d'étanchéité dirigée vers le bas, à bord externe cylindrique et qui s'applique contre une jupe d'étanchéité (8) de la capsule-clapet dirigée vers le haut, à bord interne cylindrique et qui comporte elle-même une seconde jupe d'étanchéité s'appliquant contre le bord interne de la bague du récipient.

Diverses autres modifications de l'invention ressortent par ailleurs des revendications annexées.

Des formes de réalisation de l'objet de l'invention sont représentées, à titre d'exemples non limitatifs, au dessin annexé.

La fig. 1 représente en coupe verticale, le dispositif de bouchage en position d'ouverture.

La fig. 2 représente le même dispositif de bouchage que la fig. 1 mais en position de fermeture.

La fig. 3 est une coupe partielle du dispositif vue sensiblement suivant la ligne III - III de la fig. 1.

La fig. 4 est une vue partielle en coupe verticale de l'enveloppe montrant une rampe interne.

Les fig. 5, 6 et 7 représentent des variantes du dispositif de bouchage.

La fig. 8 montre en coupe verticale, une variante de réalisation du dispositif de bouchage en position d'ouverture, la capsule-clapet intérieure étant solidaire d'une bague du flacon.

La fig. 9 représente le dispositif de bouchage de la fig. 8 en position de fermeture.

La fig. 10 représente en coupe verticale et tête en bas le dispositif de bouchage, avec doseur, en position de fermeture.

La fig. 11 représente le même dispositif en position d'ouverture.

La fig. 12 représente en deux demi-coupes le dispositif de bouchage dans une application particulière.

Les fig. 13 à 15 sont des perspectives partielles illustrant des moyens de contrôle du débit dans diverses positions caractéristiques.

La fig. 16 représente en deux demi-coupes verticales le dispositif des figures précédentes muni de moyens complémentaires.

Le dispositif de bouchage conforme à l'invention est constitué par deux pièces: une capsule-clapet 1 montée sur la bague 22 du flacon 15 et une enveloppe 9 recouvrant la capsule-clapet 1 et la bague 22.

Le capsule-clapet 1 comprend un plateau cylindrique 4 surmonté d'un picot ou bouchon 5. Ce dernier est maintenu par des lames radiales 6 au milieu d'un passage de sortie 11 prévu dans l'enveloppe 9 pour un fluide contenu dans le flacon 15. Le plateau 4 s'épanouit vers le bas en une jupe d'habillage 4a portant sur sa périphérie externe et diamétralement opposés deux crans latéraux 2 et 3.

L'enveloppe 9 présente aussi, au niveau du passage de sortie 11, un orifice central qui est ouvert ou fermé selon que le bouchon 5 de la capsule-clapet 1 l'obture ou non.

L'enveloppe 9 s'épanouit en une jupe d'habillage extérieure 12 dans la paroi interne de laquelle sont formées des rampes d'ouverture 16 et 21 dans lesquelles coulissent les crans latéraux diamétralement opposés 2 et 3 mentionnés ci-dessus de la capsule-clapet 1.

D'autre part, une jupe d'étanchéité interne 10 de l'enveloppe 9 s'applique contre une jupe d'étanchéité 8 de la capsule-clapet 1. Celle-ci présente elle-même une seconde jupe d'étanchéité 7 qui s'applique contre le bord interne de la bague 22 du flacon 15.

Comme illustré aux dessins, bien que la jupe d'étanchéité 8 de la capsule-clapet 1 soit de forme cylindrique, la jupe d'étanchéité interne 10 de l'enveloppe 9 s'amincit légèrement vers le bas et est par conséquent sensiblement dans le prolongement de la jupe d'étanchéité 8 de la capsule-clapet 1.

De même, la seconde jupe d'étanchéité 7 s'amincit légèrement vers le bas de façon à se trouver sensiblement dans le prolongement de la partie interne de la bague de forme cylindrique 22 du flacon 15.

Une telle coopération d'une partie cylindrique et d'une partie tronconique améliore l'étanchéité entre les pièces et permet en outre un écoulement meilleur et plus facile du produit sur ces pièces.

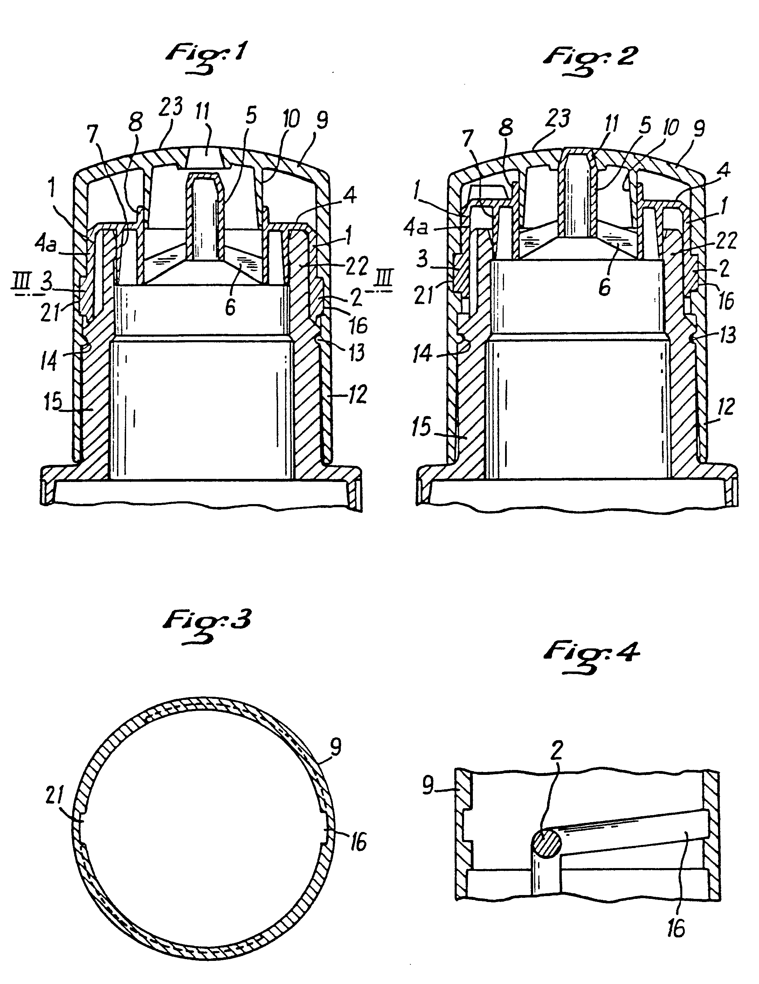

Dans les modes de réalisation des fig. 1 à 7, l'enveloppe 9 est positionnée en hauteur sur la bague 22 du flacon 15 au moyen d'un jonc horizontal 13 de l'enveloppe 9 et qui peut tourner dans une gorge 14 également horizontale, pratiquée dans la bague 22.

Dans ces modes de realisation, la capsule-clapet 1 monte ou descend pour respectivement ouvrir ou fermer l'orifice 11 de l'enveloppe 9 au moyen de ses crans opposés 2 et 3 prenant appui en rotation sur les rampes opposées 16 et 21 lorsque l'enveloppe est tournée.

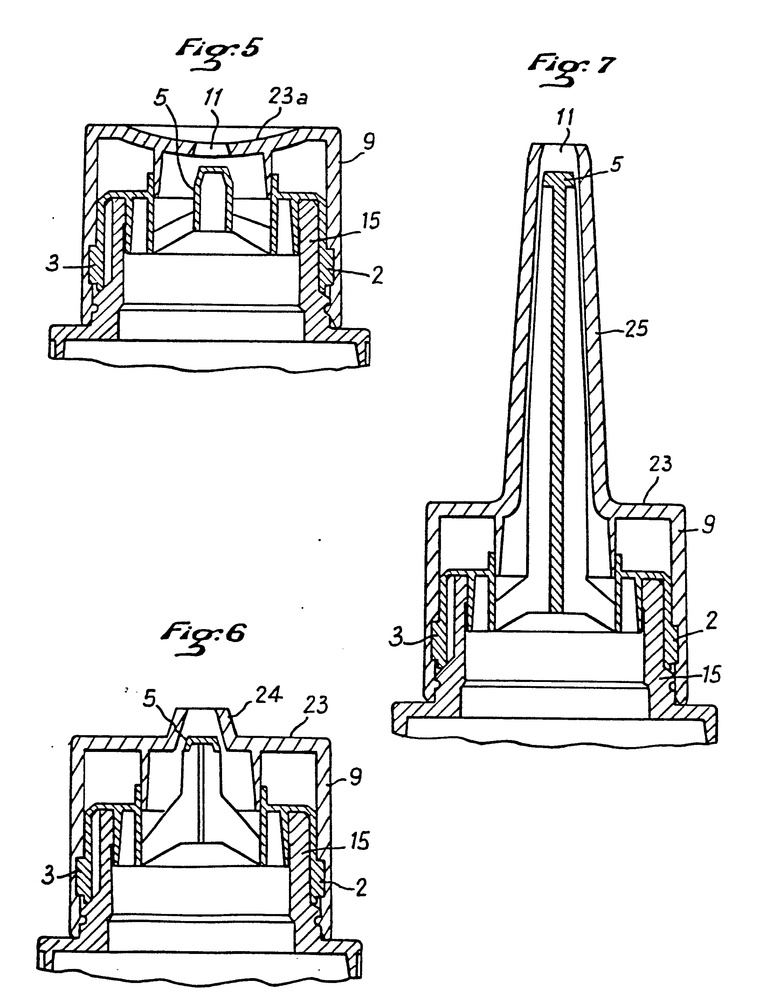

Selon la fig. 4, le cran 2 de la capsule-clapet 1 est introduit dans la rampe 16 de l'enveloppe 9 par un passage vertical.

La fig. 5 représente un dispositif de bouchage conforme à l'invention, en position ouverte, dans lequel le plateau supérieur 23 de l'enveloppe 9 présente un plateau supérieur 23a qui est en forme de coupelle, au lieu d'être bombé comme aux fig. 1 et 2.

Dans le mode de réalisation de la fig. 6, le dispositif de bouchage, montré en position ouverte, présente une enveloppe 9 dont le plateau supérieur plat 23 présente un embout percé en saillie 24.

A la fig. 7, l'orifice de sortie du dispositif de bouchage est en forme de tronc de cône allongé 25.

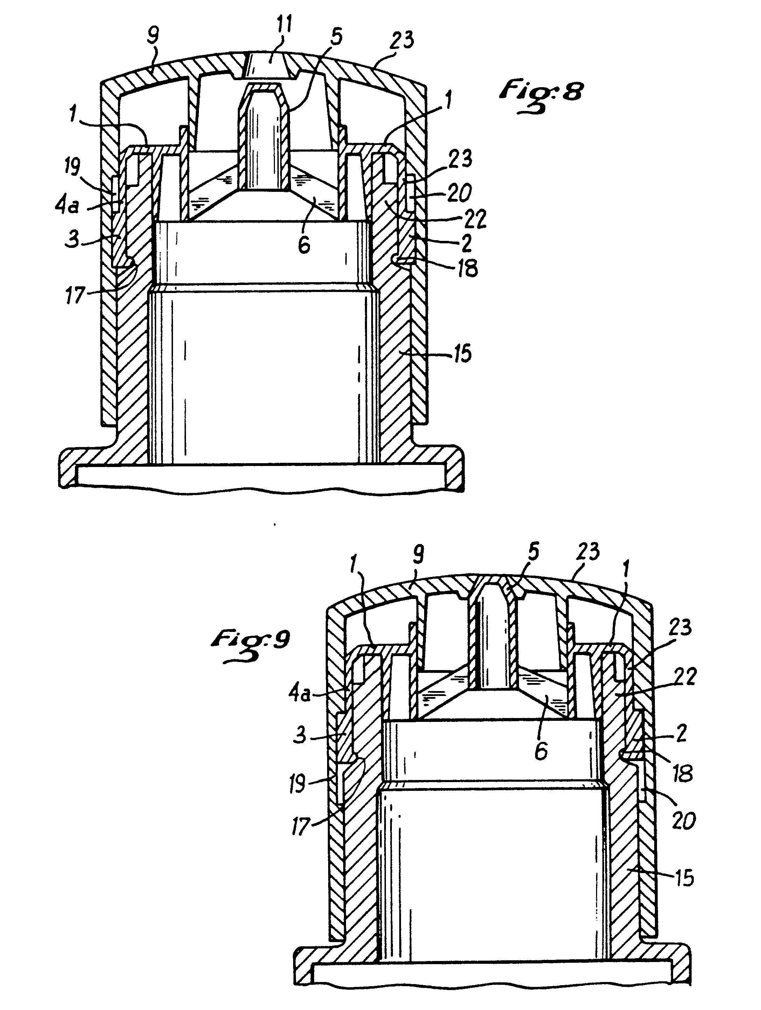

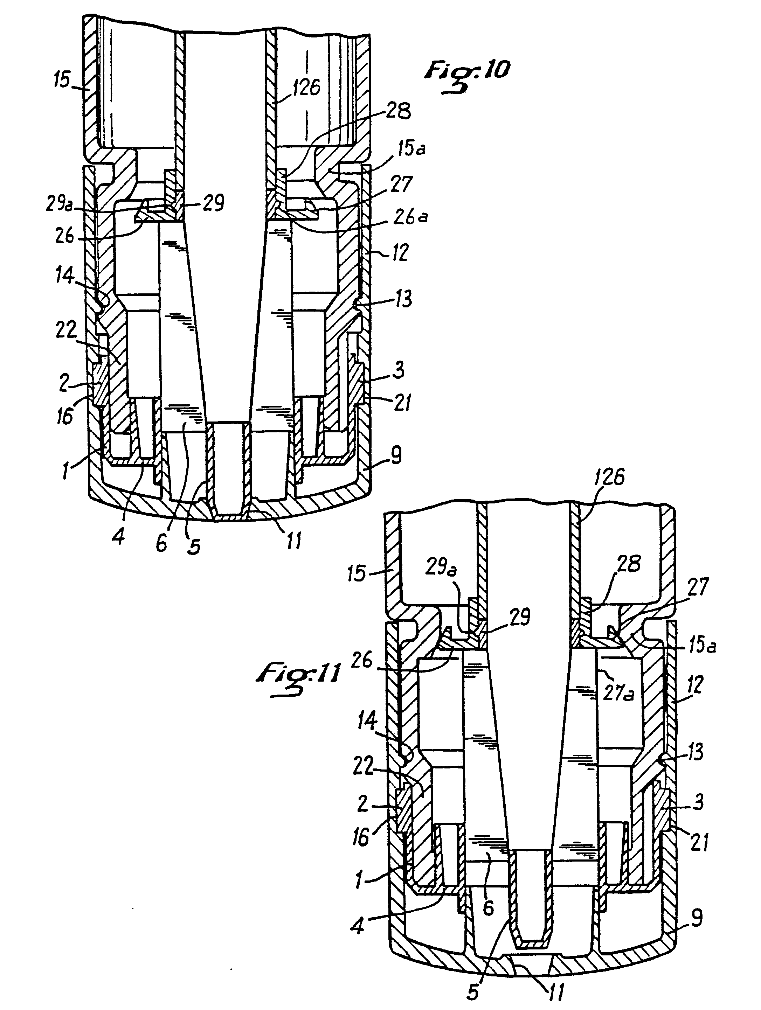

Dans la variante de réalisation des fig. 8 et 9 la capsule-clapet 1 est fixée sur la bague 22 du flacon 15 au moyen d'un jonc horizontal 16 engagé dans une gorge 17 formée dans ladite bague 22. Dans les rampes opposées 19 et 20 de l'enveloppe coulissent les crans opposés 2 et 3 de la capsule-clapet 1. Par une rotation de l'enveloppe 9, celle-ci monte ou descend par rapport à la capsule-clapet 1 en ouvrant (fig. 8), ou en fermant (fig. 9) l'orifice 11.

Dans un mode de réalisation préféré de l'invention, l'obturation et l'ouverture du dispositif sont obtenues par une rotation d'un quart de tour de l'enveloppe 9 en concevant de manière appropriée les crans et rampes opposés prévus respectivement dans la capsule-clapet 1 et l'enveloppe 9.

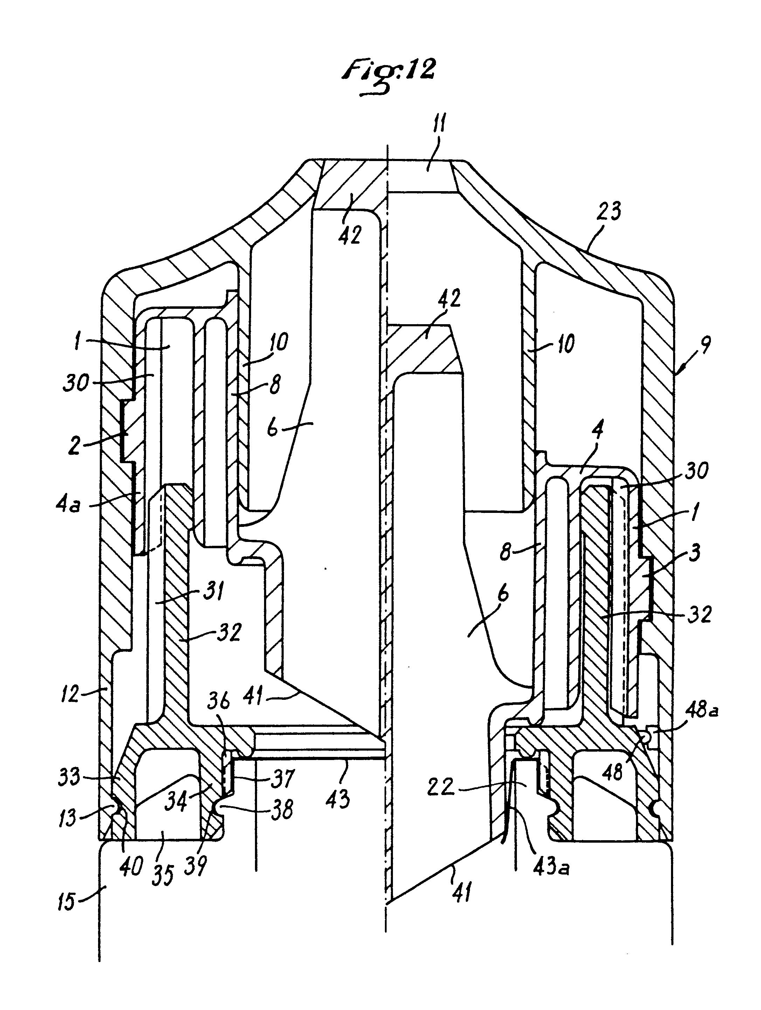

Aux fig. 10 et 11, la rotation de l'enveloppe 9 par quart de tour fait monter ou descendre la capsule-clapet intérieure 1: lorsque cette dernière monte, elle ouvre l'orifice 11 de l'enveloppe et lorsqu'elle descend elle ferme cet orifice.

Le dispositif de bouchage comporte également un dispositif doseur qui comprend, outre l'enveloppe 9 et la capsule-clapet 1 décrites dans ce qui précède, un clapet de pied 26 et un tube 126 de prise d'air. Dans ce cas, et comme représenté, le dispositif de bouchage doit être utilisé impérativement tête en bas.

Les lames radiales 6 de la capsule-clapet 1 sont prolongées et viennent supporter une bague pleine 29 formant un jonc 29a; celui-ci lorsqu'il est monté s'engage dans une gorge intérieure 26a du clapet de pied 26 qui, lui-même, présente sur sa périphérie extérieure une portée souple 27 et en son centre une jupe 28 enserrant le tube 126 de prise d'air.

La portée souple 27 de la capsule-clapet 1 vient s'appliquer, en position fermée du dispositif de bouchage, contre un relief interne ou siège 15a de l'embouchure du tube ou flacon 15 (voir fig. 11); en position ouverte la communication est établie entre le corps du tube ou flacon 15 et la tête de capsule (voir fig. 10).

Pour assembler les pièces du dispositif de bouchage des fig. 10 et 11, le clapet de pied 26 est clipsé sur la bague pleine 29 de la capsule-clapet 1 au moyen de la gorge 26a de ce clapet s'engageant sur le jonc 29a de la bague 29.

Le tube 126 de prise d'air est introduit à force dans la jupe centrale 28 du clapet de pied 26. L'ensemble positionné dans l'enveloppe 9 est clipsé sur le flacon 15.

Le dispositif de dosage étant solidaire du dispositif du bouchage fonctionne en même temps que lui.

Le flacon étant retourné comme représenté à la fig. 10, le produit contenu dans le flacon descend à l'intérieur de la capsule-clapet 1. En tournant l'enveloppe 9 dans le sens d'ouverture de la fig. 11, on ouvre l'orifice de sortie 11 du produit en même temps que l'on ferme le clapet de pied 26 qui emprisonne une dose du produit à l'intérieur de la capsule-clapet 1.

Par un mouvement de pression exercé par l'utilisateur sur le flacon qui dans ce cas est en matière souple, ou par simple gravité on expulse cette dose.

En tournant l'enveloppe 9 dans le sens de fermeture de la fig. 10, on ferme l'orifice de sortie 11 du produit en même temps que l'on ouvre le clapet de pied 26 pour reformer une nouvelle dose à l'intérieur de la capsule-clapet 1.

Le tube 126 de prise d'air extrudé et à paroi mince a deux fonctions essentielles:

- pendant la formation de la dose à l'intérieur de la capsule il permet à l'air emprisonné dans celle-ci de remonter au fond du flacon, celui-ci étant la tête en bas.
- suivant la pression exercée par l'utilisateur sur le flacon, ou par simple gravité, le tube 126 canalise l'air du fond du flacon jusqu'à la capsule-clapet 1 pour expulser la dose.

A la fig. 12, et comme dans les exemples précédents, le dispositif comporte une capsule-clapet 1 montée sur une bague 22 d'un flacon 15 et une enveloppe tournante 9 recouvrant la capsule-clapet 1 et la bague 22. La capsule-clapet 1 délimite un dessus annulaire 4 à partir duquel sont formés des lames ou croisillons 6 faisant saillie dans le passage de sortie du liquide contenu dans le flacon 15. A l'extérieur, la capsule-clapet 1 s'épanouit vers le bas en une jupe d'habillage 4a portant sur sa périphérie externe des crans latéraux diamétralement opposés 2, 3.

L'enveloppe 9 présente un orifice central 11 et forme également une jupe d'habillage extérieure 12 dont la paroi interne présente des rampes dans lesquelles coulissent les crans latéraux diamétralement opposés 2, 3 de la capsule-clapet 1.

L'enveloppe 9 forme également une jupe d'étanchéité interne 10 qui s'applique contre une jupe 8 d'étanchéité de la capsule-clapet 1 et à partir du bas de laquelle s'étendent les lames ou croisillons 6.

La capsule-clapet 1 délimite intérieurement des cannelures 30 en prise avec des nervures 31 que présente extérieurement une partie supplémentaire formant un manchon 32. Le manchon 32 délimite à sa base deux couronnes 33, 34 qui emboîtent une saillie annulaire 35 du flacon 15. Pour empêcher la rotation du manchon 32 par rapport au flacon 15 des cannelures et nervures 36, 37 sont avantageusement prévues. De plus, un bourrelet 38 du flacon entre dans une gorge 39 de la couronne 34 pour verrouiller axialement le manchon 32.

La couronne 33 présente extérieurement une gorge 40 pour le jonc horizontal 13 de l'enveloppe 9 qui peut ainsi être tournée sans pouvoir coulisser. De cette façon, la capsule-clapet 1 monte ou descend lorsque l'enveloppe est tournée en entraînant les crans latéraux opposés 2 et 3 dans les rampes prévues dans la jupe d'habillage 12 de l'enveloppe 9.

Lorsqu'il n'est pas utilisé, et comme représenté à la partie gauche de la fig. 12, flacon 15 est fermé par un couvercle 43 en forme de membrane, par exemple en aluminium ou matière plastique, pour assurer une isolation parfaite du produit qu'il contient.

Certaines au moins des lames radiales 6 délimitent à leur partie inférieure un bord tranchant 41 et supportent à leur partie supérieure un bouchon 42 pour la fermeture de l'orifice central 11 d'une manière tout à fait semblable à celle des formes de réalisation précédentes.

Lorsqu'on désire utiliser le produit contenu dans le flacon 15, il suffit de faire tourner l'enveloppe 9 dans le sens pour lequel les rampes de la jupe 12 agisset sur les crans 2, 3 en faisant descendre la capsule-clapet 1 qui est guidée axialement par les cannelures 30 et nervures 31. La descente de la capsule-clapet 1 entraîne celle des lames ou croisillons 6 de sorte que les bords tranchants 41 découpent le couvercle 43 et le cambrent comme cela est montré en 43a aur la partie droite de la fig. 12. Simultanément, le bouchon 42 eat abaissé de sorte que l'orifice 11 est libéré pour permettre au produit contenu dans le flacon 15 d'être dirigé vers l'extérieur en suivant les jupes d'étanchéité 8 et 10. Le flacon peut ensuite être refermé au moyen du dispositif de bouchage en faisant tourner l'enveloppe 9 en sens opposé.

On ne sortirait pas du cadre de l'invention en faisant supporter aux lames ou croisillons 6 d'autres accessoires que le bouchon 5, 42 et les bords tranchants 41.

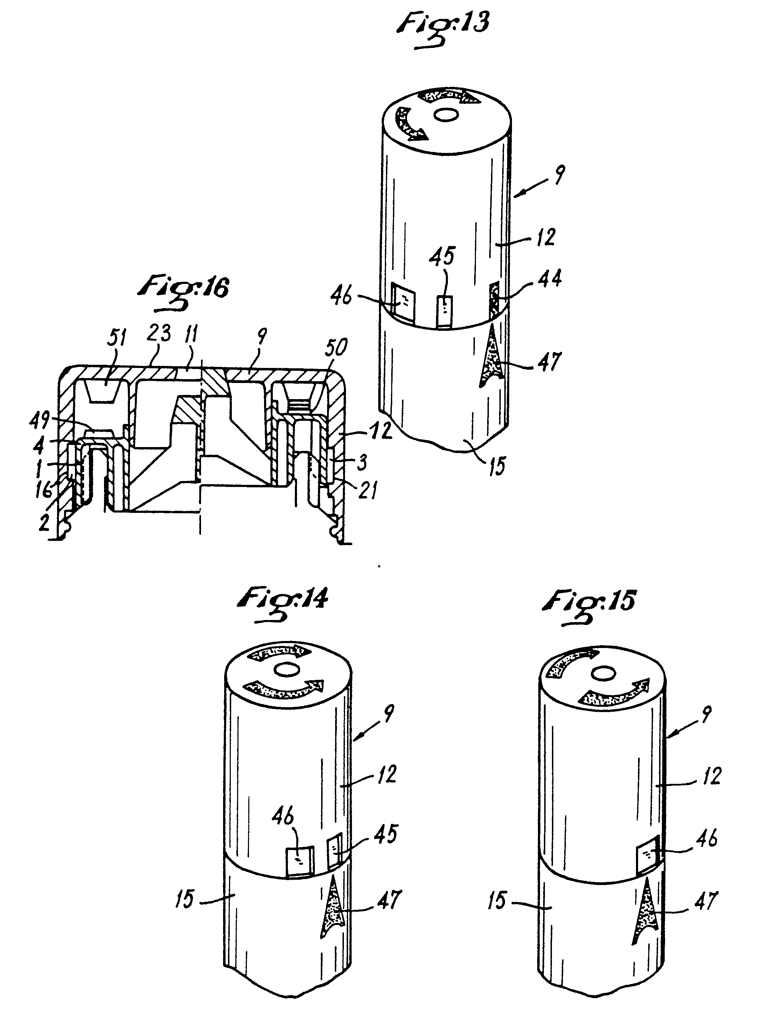

Les fig. 13 à 15 montrent que la jupe 12 de l'enveloppe 9 de l'une quelconque des réalisations précédentes présente des éléments de repérage constitués par une baguette saillante 44, une encoche de petite largeur 45 et une encoche de grande largeur 46. Par ailleurs, le flacon 15 présente un repère 47 figuré par une flèche.

En faisant coïncider la baguette 44 avec le repère 47 du flacon, l'enveloppe 9 est disposée pour assurer la fermeture du flacon en coopérant avec le bouchon du dispositif de bouchage, comme par exemple illustré par le bouchon 42 montré à la partie gauche de la fig. 12.

En faisant coïncider l'encoche de petite largeur 45 avec le repère 47 cela correspond à une position pour laquelle la capsule-clapet 1 n'est que faiblement déplacée et, par conséquent, le débit est faible entre le bouchon 42 et l'embouchure de l'enveloppe 9.

Finalement, en faisant coïncider l'encoche de grande largeur 46 avec le repère 47, cela correspond à leur position de grand débit illustrée par la partie droite de la fig. 12.

D'autres positions intermédiaires peuvent être prévues sans sortir du cadre de l'invention.

De même un ou des pions de centrage 48 (fig. 12) peuvent être prevus sur le flacon 15 pour correspondre à des evidements 48a de l'enveloppe 9 afin de créer des points durs correspondant aux positions des encoches 45 et 46.

Selon la fig. 16, le dessus 23 du plateau 4 de la capsule 1 est muni d'ailettes 49, 50 de préférence alignées verticalement avec les crans 2, 3. L'épaisseur des ailettes 49, 50 est choisie suffisamment forte pour résister à des poussées latérales sans déformation.

Le dessous de l'enveloppe 9 comporte un cliquet flexible 51 convenablement disposé par rapport à l'extrémité supérieure de l'une des rampes 16, 21 dans lesquelles sont disposés les crans 2, 3.

Lorsque l'enveloppe 9 est en position de fermeture (sens de vissage) le cliquet flexible 51 est disposé derrière l'une des ailettes 49 ou 50, ce qui assure un verrouillage de l'enveloppe 9 par rapport à la capsule-clapet 1, ce verrouillage étant suffisant pour empêcher la rotation de l'enveloppe sous l'effet de vibrations dues, par exemple, au transport du flacon. La flexibilité du cliquet 51 est cependant suffisante pour qu'il soit déformable temporairement, ce qui permet qu'il franchisse la butée constituée par l'une ou l'autre des ailettes 49, 50 pendant les mouvements (sens du dévissage) permettant l'ouverture. L'une et l'autre des positions de verrouillage et déverrouillage décrites ci-dessus apparaissent aux parties droite et respectivement gauche de la fig. 16.

**Revendications**

1. Dispositif de bouchage de tubes, de flacons ou autres récipients comprenant une capsule clapet (1) dont le plateau (4) porte un accessoire (5, 42) faisant saillie à la partie supérieure et maintenu par des lames saillantes (6) au milieu d'un passage de sortie du liquide, ledit plateau (4) se développant vers le bas en une jupe d'habillage (4a) de la bague (22, 22a) du récipient (15), ladite capsule clapet (1) étant associée à une enveloppe (9) qui comprend un plateau (23) à orifice central (11) et une jupe d'habillage extérieure (12), cet accessoire (5, 42) étant constitué par un picot ou bouchon pour la fermeture de l'orifice central (11) de l'enveloppe (9), et l'ouverture et la fermeture du dispositif étant obtenues par la rotation de l'enveloppe par rapport à la capsule clapet, <u>caractérisé</u> en ce que la jupe d'habillage (4a) comporte sur sa périphérie externe deux crans diamétralement opposés (2 et 3) et la jupe d'habillage extérieure (12), deux rampes internes d'orientation symétriquement opposée (16, 21) servant d'appui aux crans diamétralement opposés correspondants (2 et 3) de la jupe d'habillage (4a) du plateau (4) de la capsule clapet (1), l'enveloppe (9) présentant, à la surface interne du plateau de l'enveloppe, une jupe d'étanchéité (10) dirigée vers le bas, à bord externe cylindrique et qui s'applique contre une jupe d'étanchéité (8) de la capsule clapet (1) dirigée vers le haut, à bord interne cylindrique et qui comporte elle-même une seconde jupe d'étanchéité (7) s'appliquant contre le bord interne de la bague (22) du récipient (15).

2. Dispositif suivant la revendication 1, <u>caractérisé</u> en ce que la jupe d'étanchéité (8) de la capsule-clapet (1) est de forme cylindrique, la jupe d'étanchéité interne (10) de l'enveloppe (9) s'amincissant légèrement vers le bas de manière à se trouver sensiblement dans le prolongement de la jupe d'étanchéité (8) de la capsule-clapet (1), la seconde jupe d'étanchéité (7) s'amincissant également légèrement vers le bas de façon à se trouver sensiblement dans le prolongement de la partie interne de la bague (22) du récipient (15).

3. Dispositif suivant l'une des revendications 1 ou 2, <u>caractérisé</u> en ce que les moyens d'actionnement opposés prévus respectivement sur la capsule-clapet (1) et sur l'enveloppe (9) font que l'ouverture et la fermeture du dispositif sont obtenues par une rotation d'un quart de tour.

4. Dispositif suivant l'une des revendications 1 à 3, <u>caractérisé</u> en ce que certaines au moins des lames (6) ont un bord tranchant (41).

5. Dispositif suivant l'une des revendications 1 à 4, <u>caractérisé</u> en ce que l'enveloppe (9) comprend un jonc horizontal (13) coopérant avec une gorge (14) formée dans la bague (22) du récipient (15), de sorte que la capsule-clapet (1) monte ou descend lorsque l'enveloppe (9) est tournée.

6. Dispositif suivant l'une des revendications 1 à 5, <u>caractérisé</u> en ce que la capsule-clapet (1) comprend un jonc horizontal (18) coopérant avec une gorge horizontale (17) formée dans la bague (22) du récipient (15) de sorte que l'enveloppe (9) monte ou descend en tournant autour de la bague (22).

7. Dispositif selon l'une des revendications 1 à 6, <u>caractérisé</u> en ce qu'il comprend des moyens de dosage, ces moyens de dosage comportant un clapet de pied (26) coopérant avec un siège interne (15a) de la bague (22) du récipient (15), un tube (126) de prise d'air mettant en relation le fond du récipient (15) avec l'intérieur de la capsule-clapet lorsque le récipient est utilisé tête en bas.

8. Dispositif suivant la revendication 7, <u>caractérisé</u> en ce que les lames (6) de la capsule-clapet (1) sont prolongées vers le bas et supportent à leur base une bague pleine (29) présentant un jonc (29a), ledit clapet de pied (26) présentant une gorge (26a) coopérant avec ledit jonc (29a).

9. Dispositif suivant l'une des revendications 7 à 8, <u>caractérisé</u> en ce que le clapet de pied (26) porte sur sa périphérie extérieure une jupe souple (27) et comprend une partie centrale présentant une jupe (28) enserrant le tube (126) de prise d'air.

10. Dispositif suivant l'une des revendications 7 à 9, <u>caractérisé</u> en ce qu'une rotation de l'enveloppe dans le sens d'ouverture dégage l'accessoire (5) de l'orifice de sortie (11) et ferme le clapet de pied (26) de manière à séparer une dose de produit qui est expulsée par une pression exercée sur une paroi du récipient (15), une rotation de l'enveloppe (9) dans le sens de fermeture obturant l'orifice de sortie (11) en ouvrant le clapet de pied (26) pour reformer une nouvelle dose du produit.

11. Dispositif suivant l'une des revendications 1 à 10, <u>caractérisé</u> en ce que les bords tranchants (41) s'étendent au-dessus d'un couvercle (43) en forme de membrane plastique ou métallique fermant le récipient (15) sur lequel il est monté.

12. Dispositif suivant l'une des revendications 1 à 11, <u>caractérisé</u> en ce qu'il comprend en outre un manchon (32), ce manchon présentant une couronne intérieure (34) et une couronne extérieure (33), la couronne intérieure (34) étant montée sur la bague (22) du récipient (15).

13. Dispositif suivant la revendication 12, <u>caractérisé</u> en ce que des moyens à cannelures et nervures (30, 31) sont respectivement formés sur le manchon (32) et la capsule-clapet (1) pour le guidage axial de celle-ci.

14. Dispositif suivant l'une des revendications 12 à 13, <u>caractérisé</u> en ce que des moyens à cannelures et nervures (36, 37) sont respectivement formés sur la couronne intérieure (34) du manchon et sur la bague (22) du récipient (15) pour empêcher una rotation dudit manchon (32) lorsque des moyens (38) sont prévus pour verrouiller axialement le manchon (32) sur le récipient (15).

15. Dispositif suivant l'une des revendications 1 à 14, caractérisé en ce que la jupe d'habillage extérieure (12) de l'enveloppe (9) présente de premiers éléments de repérage (44, 45, 46, 49), au moins un second élément de repérage (47, 48) étant prévu sur le récipient pour définir une position de fermeture, une position d'ouverture intermédiaire et une position de pleine ouverture.

16. Dispositif suivant la revendication 15, caractérisé en ce que les premiers éléments de repérage sont respectivement une baguette saillante (44), une encoche étroite (45) et une encoche large (46).

17. Dispositif suivant l'une des revendications 15 à 16, caractérisé en ce que le second élément de repérage est une flèche (47).

18. Dispositif suivant l'une des revendications 1 à 17, caractérisé en ce qu'au moins un évidement (48a) et un pion (48) sont prévus respectivement sur l'enveloppe (9) et le récipient (15) pour créer au moins un point dur correspondant à une position d'ouverture.

19. Dispositif suivant l'une des revendications 1 à 18, caractérisé en ce que le plateau (23) de l'enveloppe (9) est prolongé par une longue partie tronconique (25).

20. Dispositif suivant l'une des revendications 1 à 19, caractérisé en ce que des ailettes (49, 50) sont prévues à la partie supérieure de la capsule-clapet (1) tandis qu'une ailette flexible (51) est disposée dans l'enveloppe (9) pour assurer un verrouillage au moins en position de fermeture de ladite enveloppe par rapport à ladite capsule-clapet.

**Patentansprüche**

1. Vorrichtung zum Verschließen von Tuben, Flaschen und anderen Behältern, bestehend aus einer Ventilkapsel (1), deren Oberseite (4) einen vorspringenden Aufsatz (5, 42) aufweist, der über den oberen Teil ragt und durch vorspringende Flügel (6) im Austrittsweg der Flüssigkeit zentriert wird, wobei sich die Oberseite (4) in einer Abdeckschürze (4a) für den Hals (22, 22a) des Behälters (15) fortsetzt, und wobei die Ventilkapsel (1) mit einer Abdeckung (9) verbunden ist, die eine Oberseite (23) mit zentraler Öffnung (11) und eine äußere Abdeckschürze (12) umfaßt, und wobei der Aufsatz (5, 42) aus einem Keil oder einem Stopfen zum Verschließen der zentralen Öffnung (11) der Abdeckung (9) besteht, und wobei das Öffnen und Schließen der Vorrichtung durch Drehung der Abdeckung gegen die Ventilkapsel erfolgt, dadurch gekennzeichnet, daß die Abdeckschürze (4a) auf ihrem äußeren Umfang zwei diametral gegenüberliegende Zapfen (2, 3) aufweist und die äußere Abdeckschürze (12) zwei nach innen gerichtete, einander symmetrisch gegenüberliegende Gänge (16, 21) zu Orientierungszwecken aufweist, in welche die diametral gegenüberliegenden entspechenden Zapfen (2, 3) der Abdeckschürze (4a) der Oberseite (4) der Ventilkapsel (1) eingreifen, wobei die Abdeckung (9) auf der Innenseite ihres Oberteils eine nach unten gerichtete Dichtungsschürze (10) aufweist, welche Schürze (10) eine zylindrische Außenfläche hat und an einer nach oben gerichteten Dichtungsschürze (8) der Ventilkapsel (1) anliegt, welche Schürze (8) eine zylindrische Innenfläche hat und ihrerseits mit einer zweiten Dichtungsschürze (7) versehen ist, die am Innenrand des Halses (22) des Behälters (15) anliegt.

2. Vorrichtung nach Anspruch 1, dadurch gekennzeichnet, daß die Dichtungsschürze (8) der Ventilkapsel (1) zylindrisch ausgebildet ist, wobei die Wandstärke der inneren Dichtungsschürze (10) der Abdeckung (9) nach unten hin leicht abnimmt, sodaß die Schürze (10) genau in die Verlängerung der Dichtungsschürze (8) der Ventilkapsel (1) paßt, und wobei die Wandstärke der zweiten Dichtungsschürze (7) in gleicher Weise nach unten leicht abnimmt, sodaß diese genau in die Verlängerung des Inneren der Mündung (22) des Behälters (15) paßt.

3. Vorrichtung nach Anspruch 1 oder 2, dadurch gekennzeichnet, daß die zusammenwirkenden Betätigungsorgane, die auf der Ventilkapsel (1) bzw. auf der Abdeckung (9) vorgesehen sind, so beschaffen sind, daß das Öffnen und Schließen der Vorrichtung durch eine Vierteldrehung bewirkt wird.

4. Vorrichtung nach einem der Ansprüche 1 bis 3, dadurch gekennzeichnet, daß zumindest gewisse der Flügel (6) einen scharfen Rand (41) haben.

5. Vorrichtung nach einem der Ansprüche 1 bis 4, dadurch gekennzeichnet, daß die Abdeckung (9) einen horizontalen Wulst (13) aufweist, der mit einer Kehle (14) auf dem Hals (22) des Behälters (15) zusammenwirkt, derart daß die Ventilkapsel (1) sich auf- oder abwärts bewegt, wenn die Abdeckung (9) verdreht wird.

6. Vorrichtung nach einem der Ansprüche 1 bis 5, dadurch gekennzeichnet, daß die Ventilkapsel (1) einen horizontalen Wulst (18) aufweist, der mit einer horizontalen Kehle (17) auf dem Hals (22) des Behälters (15) zusammenwirkt, derart daß die Abdeckung (9) sich auf- oder abwärts bewegt, wenn sie gegen den Hals (22) verdreht wird.

7. Vorrichtung nach einem der Ansprüche 1 bis 6, dadurch gekennzeichnet, daß eine Dosiereinrichtung vorgesehen ist, welche einen Verschlußteller (26) aufweist, der mit einem inneren Ventilsitz (15a) am Hals (22) des Behälters (15) zusammenwirkt, wobei ein Lufteinlaßrohr (126) das Innere des Behälters (15) mit dem Inneren der Ventilkapsel in Verbindung setzt, sobald der Behälter mit dem Kopf nach unten benützt wird.

8. Vorrichtung nach Anspruch 7, dadurch gekennzeichnet, daß die Flügel (6) der Ventilkapsel (1) nach unten verlängert sind und an ihrer Basis einen geschlossenen Ring (29) tragen, der mit einem Wulst (29a) versehen ist, wobei der Verschlußteller (26) eine Kehle (26a) aufweist, die mit dem Wulst (29a) zusammenwirkt.

9. Vorrichtung nach Anspruch 7 oder 8, dadurch gekennzeichnet, daß der Verschlußteller (26) an seinem Außenrand eine biegsame Schürze (27) trägt und einen Mittelteil aufweist, der in Form einer Schürze (28) das Lufteinlaßrohr (126) aufnimmt.

10. Vorrichtung nach einem der Ansprüche 7 bis 9, dadurch gekennzeichnet, daß eine Verdrehung der Abdeckung in Öffnungsrichtung den Aufsatz (5) aus der Austrittsöffnung (11) löst und den Verschlußteller (26) schließt, wodurch eine bestimmte Menge des Produkts abgesondert wird, die durch einen Druck auf eine Wand des Behälters (15) herausgedrückt wird, während eine Drehung der Abdeckung (9) in Schließrichtung die Austrittsöffnung (11) verschließt und den Verschlußteller (26) öffnet, um neuerlich eine Dosis des Produkts bereitzustellen.

11. Vorrichtung nach einem der Ansprüche 1 bis 10, dadurch gekennzeichnet, daß sich die scharfen Ränder (41) oberhalb eines Deckels (43) befinden, der in Form einer Kunststoff- oder Metallfolie den Behälter (15) abschließt, auf dem er aufgebracht ist.

12. Vorrichtung nach einem der Ansprüche 1 bis 11, dadurch gekennzeichnet, daß darüberhinaus ein Stutzen (32) vorgesehen ist, welcher einen inneren Kranz (34) und einen äußeren Kranz (33) aufweist, wobei der innere Kranz (34) auf dem Hals (22) des Behälters (15) befestigt ist.

13. Vorrichtung nach Anspruch 12, dadurch gekennzeichnet, daß entlang des Stutzens (32) und der Ventilkapsel (1) Führungsrinnen und Rippen (30 und 31) angebracht sind, die eine axiale Führung der Ventilkapsel bewirken.

14. Vorrichtung nach Anspruch 12 oder 13, dadurch gekennzeichnet, daß Führungsrinnen und Rippen (36 und 37) auf dem inneren Kranz (34) des Stutzens bzw. auf dem Hals (22) des Behälters (15) angebracht sind, um eine Drehung des Stutzens (32) zu verhindern, wenn Elemente (38) vorgesehen sind, die den Stutzen (32) auf dem Behälter (15) axial fixieren.

15. Vorrichtung nach einem der Ansprüche 1 bis 14, dadurch gekennzeichnet, daß die äußere Abdeckschürze (12) der Abdeckung (9) erste Markierungselemente (44, 45, 46, 49) aufweist, und daß wenigstens ein zweites Markierungselement (47, 48) auf dem Behälter vorgesehen ist, um eine Verschlußposition, eine mittlere Öffnungsposition und eine volle Öffnungsposition zu definieren.

16. Vorrichtung nach Anspruch 15, dadurch gekennzeichnet, daß die ersten Markierungselemente aus einer vorstehenden Leiste (44), einem schmalen Schlitz (45) und einem breiten Schlitz (46) bestehen.

17. Vorrichtung nach Anspruch 15 oder 16, dadurch gekennzeichnet, daß das zweite Markierungselement als Pfeil (47) ausgebildet ist.

18. Vorrichtung nach einem der Ansprüche 1 bis 17, dadurch gekennzeichnet, daß wenigstens eine Ausnehmung (48a) und ein Vorsprung (48) auf der Abdeckung (9) bzw. auf dem Behälter (15) vorgesehen sind, um wenigstens einen Rastpunkt, der einer Öffnungsposition entspricht, zu schaffen.

19. Vorrichtung nach einem der Ansprüche 1 bis 18, dadurch gekennzeichnet, daß die Oberseite (23) der Abdeckung (9) durch einen langen, kegelstumpfförmigen Teil (25) verlängert ist.

20. Vorrichtung nach einem der Ansprüche 1 bis 19, dadurch gekennzeichnet, daß Flügel (49, 50) auf dem Oberteil der Ventilkapsel (1) vorgesehen sind, und daß ein biegsamer Flügel (51) auf der Abdeckung (9) angebracht ist, um wenigstens in der Verschlußposition der Abdeckung (9) eine Verriegelung gegenüber der Ventilkapsel (1) zu gewährleisten.

**Claims**

1. Obturating device for tubes, flasks or other containers comprising a valve-cap (1), the plate of which carries an auxiliary component (5, 42) protruding at the upper part and maintained by protruding blades (6) in middle of an outlet passage for the liquid, said plate (4) being downwardly extended into a fitting skirt (4a) for the neck (22, 22a) of the container (15), said valve-cap (1) being associated with a casing (9) comprising a plate (23) having a central hole (11) and an outer fitting skirt (12), this auxiliary component (5, 42) being formed by a finger or plug for the closing of the central hole (11) of the casing (9), and the opening and closing of the device being obtained by the rotation of the envelope with respect to the valve-cap, characterized in that the fitting skirt (4a) comprises on its outer periphery two diametrically opposed notches (2 and 3) and the outer fitting skirt (12) two inner ramps of a symetrically opposed orientation (16, 21) used as a bearing for the corresponding diametrically opposed notches (2 and 3) of the fitting skirt (4a) of the plate (4) of the valve-cap (1), the casing (9) having, at the inner surface of the plate of the envelope, a downwardly directed tightness skirt (10), having cylindrical outer edge and which is applied against a tightness skirt (8) of the upwardly directed valve-cap (1) having cylindrical inner edge and which itself comprises a second tightness skirt (7) applied against the inner edge of the neck (22) of the container (15).

2. Device according to claim 1, characterized in that the tightness skirt (8) of the valve-cap (1) has a cylindrical shape, the inner tightness skirt (10) of the casing (9) being slightly downwardly thinnered in order to be substantially in the extension of the tightness skirt (8) of the valve-cap (1), the second tightness skirt (7) being also slightly downwardly thinnered in order to be substantially in the extension of the inner part of the neck (22) of the container (15).

3. Device according to one of claims 1 or 2, characterized in that the opposite activating means respectively provided on the valve-cap (1) and on the casing (9) make that the opening and closing of the device are obtained by a rotation of a quarter of circumference.

4. Device according to one of claims 1 to 3, characterized in that some at least of the blades (6) have a cutting edge (41).

5. Device according to one of claims 1 to 3, characterized in that the casing (9) comprises an horizontal plain ring (13) cooperating with a groove (14) formed in the neck (22) of the container (15), whereby the valve-cap (1) goes up or down when the casing (9) is rotated.

6. Device according to one of claims 1 to 5, characterized in that the valve-cap (1) comprises an horizontal plain ring (18) cooperating with an horizontal groove (17) formed in the neck (22) of the container (15), whereby the casing (9) goes up or down by rotating around the neck (22).

7. Device according to one of claims 1 to 6, characterized in that it comprises dosing means, these dosing means comprising a foot valve (26) cooperating with an inner seat (15a) of the neck (22) of the container (15), an air intake tube (126) making the bottom part of the container (15) to communicate with the inner part of the valve-cap when the container is used up-side-down.

8. Device according to claim 7, characterized in that the blades (6) of the valve-cap (1) are downwardly extended and carries of the base thereof, a plain collar (29) having a plain ring (29a), said foot valve (26) having a groove (26a) cooperating with said plain ring (29a).

9. Device according to one of claims 7 to 8, characterized in that the foot-valve (26) carries, on its outer periphery, a flexible skirt (27) and comprises a central part provided with a skirt (28) closely surrounding the air intake tube (126).

10. Device according to one of claims 7 to 9, characterized in that a rotation of the casing in the opening direction disengages the auxiliary component (5) from the outlet hole (11) and closes the foot valve (26) in order to separate a dose of product which is ejected by a pressure applied on a wall of the container (15), a rotation of the casing (9) in the closing direction obturating the outlet hole (11) by opening the foot valve (26) for forming again a new dose of the product.

11. Device according to one of claims 1 to 10, characterized in that the cutting edges (41) are extended above a plastic or metal membrane shaped lid (43) enclosing the container (15) on which it is mounted.

12. Device according to one of claims 1 to 11, characterized in that it further comprises a sleeve (32), this sleeve having an inner collar (34) and an outer collar (33), the inner collar (34) being mounted on the neck (22) of the container (15).

13. Device according to claim 12, characterized in that rib and groove means (30, 31) are respectively formed on the sleeve (32) and valve-cap (1) for the axial guiding thereof.

14. Device according to one of claims 12 to 13, characterized in that rib and groove means (36, 37) are respectively formed on the inner collar (34) of the sleeve and on the neck (22) of the container (15) for preventing a rotation of said sleeve (32) when means (38) are provided for axially locking the sleeve (32) on the container (15).

15. Device according to one of claims 1 to 14, characterized in that the outer fitting skirt (12) of the casing (9) is provided with first indexing elements (44, 45, 46, 49), at least one second indexing element (47, 48) being provided on the container for defining a closed position, an intermediary open position and a completely open position.

16. Device according to claim 15, characterized in that the first indexing elements are respectively a protruding small rod (44), a narrow groove (45) and a wide groove (46).

17. Device according to one of claims 15 to 16, characterized in that the second indexing element is an arrow (47).

18. Device according to one of claims 1 to 17, characterized in that at least one recess (48a) and a stud (48) are respectively provided on the casing (9) and container (15) for forming at least one hard point corresponding to an opening position.

19. Device according to one of claims 1 to 18, characterized in that the plate (23) of the casing (9) is extended by a long tapered shaped part (25).

20. Device according to one of claims 1 to 19, characterized in that fins (49, 50) are provided at the upper part of the valve-cap (1) while a flexible fin (51) is placed in the casing (9) for providing a locking at least in the closing position of said casing with respect to said valve-cap.

Fig:1

Fig:2

Fig:3

Fig:4

*Fig.5*

5  11  23a

9

15

3

2

*Fig.7*

11

5

25

23

9

3

2

15

*Fig.6*

5  24  23

9

15

3

2

Fig.8

Fig.9

*Fig:10*

*Fig:11*

*Fig.12*

*Fig:13*

*Fig:16*

*Fig:14*

*Fig:15*